# EUROPEAN PATENT APPLICATION

(11) **EP 1 881 550 A1**
(43) Date of publication of application: **23.01.2008**
(21) Application number: 06745963.6
(22) Date of filing: 01.05.2006
(51) Int. Cl.: H01M 8/04, H01M 8/10

(54) **FUEL CELL**

(30) Priority: 13.05.2005 JP 2005141201
(71) Applicant: KABUSHIKI KAISHA TOSHIBA, Tokyo 105-8001 (JP)
(72) Inventor: YASUI, Hideaki, Tokyo 105-8001 (JP); TAKAHASHI, Kenichi, Tokyo 105-8001 (JP); KAWAMURA, Koichi, Tokyo 105-8001 (JP)
(74) Representative: Henkel, Feiler & Hänzel
(86) International application number: PCT/JP2006/309112
(87) International publication number: WO 2006/120966

(57) **Abstract**

A membrane electrode assembly 10 includes a solid electrolyte membrane 1 made of high polymer material, and a fuel electrode 2 and an air electrode 3 laminated at both sides of the solid electrolyte membrane 1. A fuel tank 11 is composed by fixing a box-like container 12 to the membrane electrode assembly 10. The box-like container 12 has an opening provided at a side facing the membrane electrode assembly 10, and a flange 13 is formed on the edge of this opening. A cover plate 15 is attached to the rear side of the air electrode 3 of the membrane electrode assembly 10, and a peripheral edge 15a of the cover plate 15 is bent along the outer circumference of the membrane electrode assembly 10, the outer circumference and the rear side peripheral edge of the flange 13, and by enclosing the membrane electrode assembly 10 and the peripheral edge of the flange 13, the box-like container 12 is fixed to the membrane electrode assembly 10.

## Description

### Technical Field

The present invention relates to a fuel cell for generating electricity by using hydrogen ions separated from a liquid fuel by catalytic reaction in a fuel electrode, and more particularly to a fuel cell not using any particular active transfer means such as a pump for supplying the liquid fuel to the fuel electrode.

### Background Art

In recent years, to allow various portable electronic appliances such as notebook computers and cellular phones to be used for long periods without charging, various attempts have been made to use fuel cells as power sources for these portable appliances. It is a feature of a fuel cell that electricity is generated by supplying fuel and air only, and that electricity can be generated continuously for a long period merely by replenishing the fuel. Therefore, when made smaller, it is a most advantageous system as power source for a portable appliance.

In particular, a direct methanol fuel cell (DMFC) is expected to be very useful as power source for a small-sized portable appliance because methanol of high energy density is used as fuel, and an electric current is directly derived from methanol by using a catalytic layer and a solid electrolyte membrane, and hence any reforming device is not required, downsizing is enabled, and the fuel can be handled more easily than the hydrogen gas. The fuel supply system of a DMFC includes a gas-supply-type DMFC in which a liquid fuel is vaporized and supplied to the inside of the fuel cell by a blower or the like, a liquid-supply-type DMFC in which a liquid fuel is directly supplied to the inside of the fuel cell by a pump or the like, and an internal-vaporization-type DMFC in which a liquid fuel supplied to the fuel cell is vaporized inside the fuel cell and supplied to the fuel electrode.

As disclosed in Jpn. Pat. Appln. KOKAI Publication No. 2000-106201, the internal-vaporization-type DMFC includes a fuel permeation layer for retaining the liquid fuel, and a fuel vaporization layer for diffusing a vaporizable component of the liquid fuel retained in the fuel permeation layer, in which the vaporized liquid fuel is supplied from the fuel vaporization layer to the fuel electrode. In this publication, the liquid fuel is a methanol aqueous solution of methanol and water mixed at a molecular ratio of 1:1, and both methanol and water are supplied to the fuel electrode in a gaseous state. Such fuel cell using methanol aqueous solution as fuel is not sufficient in output characteristic due to difference in vaporization rate between methanol and water. It has been hence attempted to develop a fuel cell using pure methanol as fuel in order to enhance the output characteristic and further downsize the fuel cell.

Further, as a small fuel cell mainly used in a mobile apparatus, a passive fuel cell is known, which does not use a fuel pump or other active transfer means for supplying a liquid fuel to a fuel electrode.

In the passive fuel cell, a fuel electrode is coupled to one side of a solid electrolyte membrane, and an air electrode is coupled to the other side, thereby constituting a membrane electrode assembly. A fuel tank is provided at the fuel electrode side of the membrane electrode assembly, and an air chamber is provided at the air electrode side. The fuel electrode is composed of a fuel electrode catalytic layer and a fuel electrode current collector. The fuel electrode current collector is laminated at the rear side of the fuel electrode catalytic layer, and connects the fuel electrode catalytic layer electrically to an external circuit. Similarly, the air electrode is composed of an air electrode catalytic layer and an air electrode current collector. The air electrode current collector is laminated at the rear side of the air electrode catalytic layer, and connects the air electrode catalytic layer electrically to an external circuit.

In particular, in the passive fuel cell for a mobile apparatus, downsizing is an important designing point, and it is demanded to simplify the configuration of the portion for joining the fuel tank to the membrane electrode assembly, and reduce the size of the fuel cell.

### Disclosure of Invention

The invention has been made in the light of the problem of the fuel cell not using active transfer means such as a pump for supplying a liquid fuel to a fuel electrode. It is hence an object of the invention to reduce the size of a fuel cell by simplifying the configuration of the portion for joining the fuel tank to the membrane electrode assembly of the fuel cell.

A fuel cell of the present invention comprises:
a membrane electrode assembly having a solid electrolyte membrane, a fuel electrode laminated at one side of the solid electrolyte membrane, and an air electrode laminated at the other side of the solid electrolyte membrane;
a fuel tank which is disposed at a rear side of the fuel electrode, stores a liquid fuel and supplies the liquid fuel to the fuel electrode; and
a cover plate disposed at a rear side of the air electrode,
wherein the fuel tank is composed of a box-like container, and this box-like container has an opening formed at a side facing the membrane electrode assembly, and also has a flange projecting out to the outer side, parallel to the membrane electrode assembly, formed at the edge of this opening, and
a peripheral edge of the cover plate is bent along an outer circumference of the membrane electrode assembly, an outer circumference and a rear side peripheral edge of the flange, and the membrane electrode assembly and the flange are enclosed by the peripheral edge of the cover plate, thereby the box-like container is fixed to the membrane electrode assembly.

According to the fuel cell of the invention, the fuel tank can be tightly connected to the membrane electrode assembly without using a frame, screw, clip or similar member. As a result, the portion surrounding the membrane electrode assembly from outer circumference is simplified in structure, and the size of the fuel cell can be reduced.

For example, in the case of a flat and rectangular membrane electrode assembly, the outer shape of the flange of the box-like container is formed in the same size and rectangular shape of the membrane electrode assembly, and the peripheral edge of the cover plate is bent so as to enclose the four sides of the rectangular shape. Instead, the peripheral edge of the cover plate may be bent so as to enclose two opposite sides of the rectangular shape mutually.

Preferably, a plurality of catches are formed on the peripheral edge of the cover plate, and these catches are bent, so that the box-like container can be fixed to the membrane electrode assembly.

In a modified example of the fuel cell of the invention, the flange can be omitted.

In this case, a fuel cell of the invention comprises:
a membrane electrode assembly having a solid electrolyte membrane, a fuel electrode laminated at one side of the solid electrolyte membrane, and an air electrode laminated at the other side of the solid electrolyte membrane;
a fuel tank which is disposed at a rear side of the fuel electrode, stores a liquid fuel and supplies the liquid fuel to the fuel electrode; and
a cover plate disposed at a rear side of the air electrode,
wherein the fuel tank is composed of a box-like container having an opening formed at a side facing the membrane electrode assembly, and
a peripheral edge of the cover plate is bent along an outer circumference of the membrane electrode assembly, an outer circumference and a bottom peripheral edge of the box-like container, and the membrane electrode assembly and the box-like container are enclosed by the peripheral edge of the cover plate, thereby the box-like container is fixed to the membrane electrode assembly.

For example, in the case of a flat and rectangular membrane electrode assembly, the outer shape of the box-like container is formed in the same size and rectangular shape of the membrane electrode assembly, and the peripheral edge of the cover plate is bent so as to enclose the four sides of the rectangular shape. Instead, the peripheral edge of the cover plate may be bent so as to enclose two opposite sides of the rectangular shape mutually.

Preferably, a plurality of catches are formed on the peripheral edge of the cover plate, and these catches are bent, so that the box-like container can be fixed to the membrane electrode assembly.

In this case, preferably, a plurality of recesses are formed in the bottom peripheral edge of the box-like container corresponding to the plurality of catches, and the distal end portions of the catches are put into the recesses. As a result, the distal end portions do not project from the bottom of the box-like container.

For example, when the depth of the recesses is made equal to the thickness of the distal end portions of the catches, the surface of the distal end portions is made flush with the bottom of the box-like container.

Alternatively, projecting portions are provided, except four corners, on the peripheral edge of the cover plate, and by bending the projecting portions, the box-like container can be fixed to the membrane electrode assembly.

In this case, preferably, step portions are formed in the bottom peripheral edge of the box-like container corresponding to the projecting portions, and the distal end portions of the projecting portions are put into the step portions. As a result, the distal end portions do not project from the bottom of the box-like container.

For example, when the depth of the step portions is made equal to the thickness of the distal end portions of the projecting portions, the surface of the distal end portions is made flush with the bottom of the box-like container.

According to the fuel cell of the invention, since the configuration of the portion for surrounding the membrane electrode assembly from outside is simplified, the fuel cell can be made smaller. Also according to the fuel cell of the invention, since the number of parts is small, the time required to assemble the fuel cell can be shortened.

### Brief Description of Drawings

FIG. 1 is a sectional view of an outline configuration of a fuel cell of the invention.
FIG. 2 is a perspective view of an example of the fuel cell of the invention.
FIG. 3A is a perspective view of a method for assembling the fuel cell in FIG. 2.
FIG. 3B is a perspective view of a method for assembling the fuel cell in FIG. 2.
FIG. 3C is a perspective view of a method for assembling the fuel cell in FIG. 2.
FIG. 3D is a perspective view of a method for assembling the fuel cell in FIG. 2.
FIG. 3E is a perspective view of a method for assembling the fuel cell in FIG. 2.
FIG. 4 is a perspective view of another example of the fuel cell of the invention.
FIG. 5A is a perspective view of a method for assembling the fuel cell in FIG. 4.
FIG. 5B is a perspective view of a method for assembling the fuel cell in FIG. 4.
FIG. 5C is a perspective view of a method for assembling the fuel cell in FIG. 4.
FIG. 5D is a perspective view of a method for assembling the fuel cell in FIG. 4.
FIG. 5E is a perspective view of a method for assembling the fuel cell in FIG. 4.
FIG. 6 is a perspective view of another example of the fuel cell of the invention.
FIG. 7A is a perspective view of a method for assembling the fuel cell in FIG. 6.
FIG. 7B is a perspective view of a method for assembling the fuel cell in FIG. 6.
FIG. 7C is a perspective view of a method for assembling the fuel cell in FIG. 6.
FIG. 7D is a perspective view of a method for assembling the fuel cell in FIG. 6.
FIG. 8A is a perspective view seen from top side of another example of the fuel cell of the invention.
FIG. 8B is a perspective sectional view of the fuel cell in FIG. 8A.
FIG. 8C is a perspective view seen from bottom side of the fuel cell in FIG. 8A.
FIG. 8D is a perspective partial sectional view of detailed shape of a catch part of the fuel cell in FIG. 8A.
FIG. 9A is a perspective view seen from top side of another example of the fuel cell of the invention.
FIG. 9B is a perspective sectional view of the fuel cell in FIG. 9A.
FIG. 9C is a perspective view seen from bottom side of the fuel cell in FIG. 9A.
FIG. 9D is a perspective partial sectional view of detailed shape of a catch part of the fuel cell in FIG. 9A.
FIG. 10A is a perspective view seen from top side of another example of the fuel cell of the invention.
FIG. 10B is a perspective sectional view of the fuel cell in FIG. 10A.
FIG. 10C is a perspective view seen from bottom side of the fuel cell in FIG. 10A.
FIG. 10D is a perspective partial sectional view of detailed shape of a catch part of the fuel cell in FIG. 10A.
FIG. 11A is a perspective view seen from top side of another example of the fuel cell of the invention.
FIG. 11B is a perspective sectional view of the fuel cell in FIG. 11A.
FIG. 11C is a perspective view seen from bottom side of the fuel cell in FIG. 11A.
FIG. 11D is a perspective partial sectional view of detailed shape of a catch part of the fuel cell in FIG. 11A.
FIG. 12A is a perspective view seen from top side of another example of the fuel cell of the invention.
FIG. 12B is a perspective sectional view of the fuel cell in FIG. 12A.
FIG. 12C is a perspective view seen from bottom side of the fuel cell in FIG. 12A.
FIG. 12D is a perspective partial sectional view of detailed shape of a catch part of the fuel cell in FIG. 12A.
FIG. 13A is a perspective view seen from top side of another example of the fuel cell of the invention.
FIG. 13B is a perspective sectional view of the fuel cell in FIG. 13A.
FIG. 13C is a perspective view seen from bottom side of the fuel cell in FIG. 13A.
FIG. 13D is a perspective partial sectional view of detailed shape of a catch part of the fuel cell in FIG. 13A.
FIG. 14A is a perspective view seen from top side of another example of the fuel cell of the invention.
FIG. 14B is a perspective sectional view of the fuel cell in FIG. 14A.
FIG. 14C is a perspective view seen from bottom side of the fuel cell in FIG. 14A.
FIG. 14D is a perspective partial sectional view of detailed shape of a catch part of the fuel cell in FIG. 14A.
FIG. 15A is a perspective view seen from top side of another example of the fuel cell of the invention.
FIG. 15B is a perspective sectional view of the fuel cell in FIG. 15A.
FIG. 15C is a perspective view seen from bottom side of the fuel cell in FIG. 15A.
FIG. 15D is a perspective partial sectional view of detailed shape of a peripheral edge of the fuel cell in FIG. 15A.
FIG. 16A is a perspective view seen from top side of another example of the fuel cell of the invention.
FIG. 16B is a perspective sectional view of the fuel cell in FIG. 16A.
FIG. 16C is a perspective view seen from bottom side of the fuel cell in FIG. 16A.
FIG. 16D is a perspective partial sectional view of detailed shape of a peripheral edge of the fuel cell in FIG. 16A.
FIG. 17A is a view of another example of the fuel cell of the invention showing a detailed shape of a catch part.
FIG. 17B is a perspective partial sectional view of a procedure of bending a catch part of the fuel cell in FIG. 17A.
FIG. 17C is a perspective partial sectional view of a procedure of bending the catch part of the fuel cell in FIG. 17A.

### Best Mode for Carrying Out the Invention

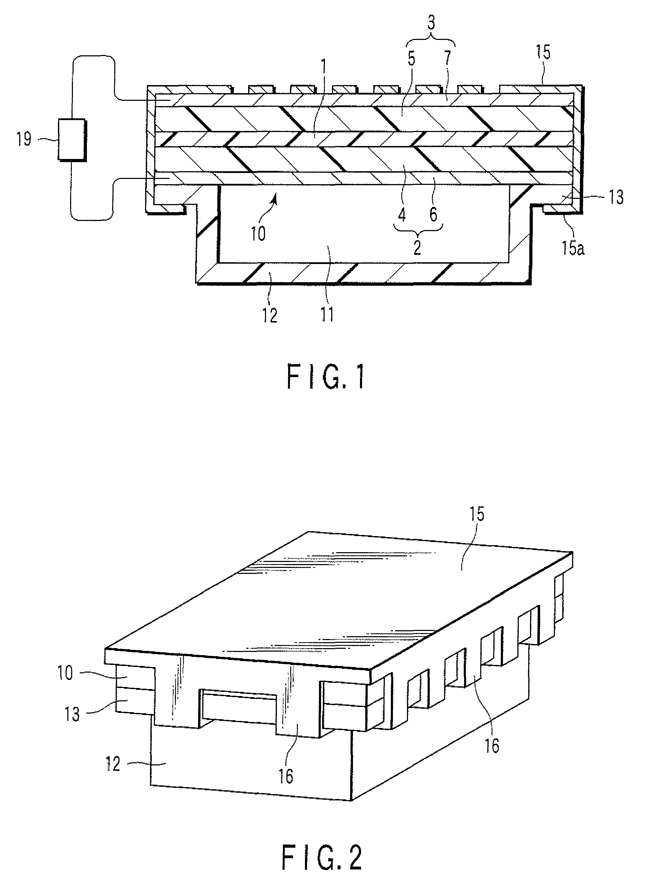

FIG. 1 shows an outline configuration (sectional view) of a fuel cell of the invention. In the drawing, reference number 1 is a solid electrolyte membrane; 2, a fuel electrode; 3, an air electrode; 10, a membrane electrode assembly (MEA); 11, a fuel tank; 12, a box-like container; 13, a flange; and 15, a cover plate.

The membrane electrode assembly 10 as a power generating part is composed of the solid electrolyte membrane 1 made of high polymer material, and the fuel electrode 2 (anode) and the air electrode 3 (cathode) laminated at both sides of the solid electrolyte membrane 1. The fuel electrode 2 is composed of a fuel electrode catalytic layer 4 and a fuel electrode current collector 6. The air electrode 3 is composed of an air electrode catalytic layer 5 and an air electrode current collector 7.

The fuel electrode catalytic layer 4 and the air electrode catalytic layer 5 are made of carbon paper coated with catalyst of a platinum-ruthenium alloy, and the catalyst-coated side of the carbon paper is heat-compressed in a direction contacting with the solid electrolyte membrane 1. At the rear side of the fuel electrode catalytic layer 4 (opposite side to the solid electrolyte membrane 1), the fuel electrode current collector 6 is laminated for taking out an electric current to outside. Similarly, at the rear side of the air electrode catalytic layer 5 (opposite side to the solid electrolyte membrane 1), the air electrode current collector 7 is laminated for taking out an electric current to outside. The fuel electrode current collector 6 and the air electrode current collector 7 are connected by way of an external circuit 19. For fuel supply to the fuel electrode catalytic layer 4 and for air supply to the air electrode catalytic layer 5, a number of through-holes (not shown) are formed in the fuel electrode current collector 6 and the air electrode current collector 7. Thus, the solid electrolyte membrane 1, fuel electrode 2 and air electrode 3 are formed integrally to constitute the membrane electrode assembly 10.

The fuel tank 11 is provided at the rear side of the fuel electrode 2 of the membrane electrode assembly 10 (opposite side to the solid electrolyte membrane 1), and a liquid fuel is stored therein. This liquid fuel is supplied as a gaseous component into the fuel electrode 2 by way of a gas-liquid separation membrane (not shown) provided, for example, between the fuel tank 11 and the fuel electrode 2. In the fuel electrode of the invention, as shown below, the fuel tank 11 is composed by fixing the box-like container 12 to the membrane electrode assembly 10. The box-like container 12 has an opening provided at a side opposite to the membrane electrode assembly 10, and the flange 13 parallel to the membrane electrode assembly 10 and projecting to outer side is formed at the edge of this opening.

To fix the box-like container 12 to the membrane electrode assembly 10, the cover plate 15 is attached to the rear side of the air electrode 3 of the membrane electrode assembly 10 (opposite side to the solid electrolyte membrane 1). This cover plate 15 has its peripheral edge 15a bent along the outer circumference of the membrane electrode assembly 10 and the outer circumference and back peripheral edge of the flange 13. Thus, by enclosing the peripheral edge of the membrane electrode assembly 10 and the flange 13 by the peripheral edge 15a of the cover plate 15, the box-like container 12 is fixed to the membrane electrode assembly 10. The cover plate 15 has a number of small pores for supplying air to the air electrode 3.

Between the cover plate 15 and the air electrode 3, meanwhile, a humidity retention plate may be provided to suppress evaporation of water generated in the air electrode.

FIG. 2 is a perspective view of an example of the fuel cell according to the invention. In this example, the geometry of the horizontal projection of the membrane electrode assembly 10 is rectangular, and the outer shape of the flange 13 of the box-like container 12 is also in the same size and rectangular shape as the membrane electrode assembly 10. A plurality of catches 16 are provided on the peripheral edge of the cover plate 15. These catches 16 are provided individually on four sides of the cover plate 15 corresponding to four sides of the rectangular shape. By bending these catches 16, the membrane electrode assembly 10 and the flange 13 of the box-like container 12 are enclosed, so that the box-like container 12 is fixed to the membrane electrode assembly 10.

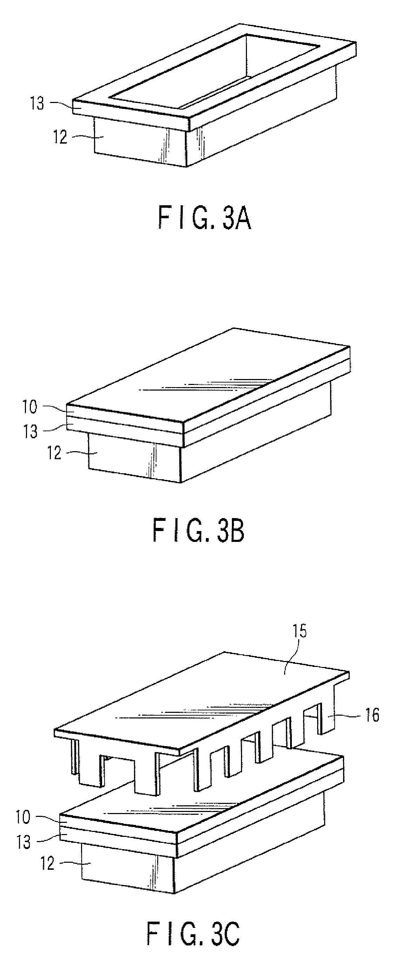

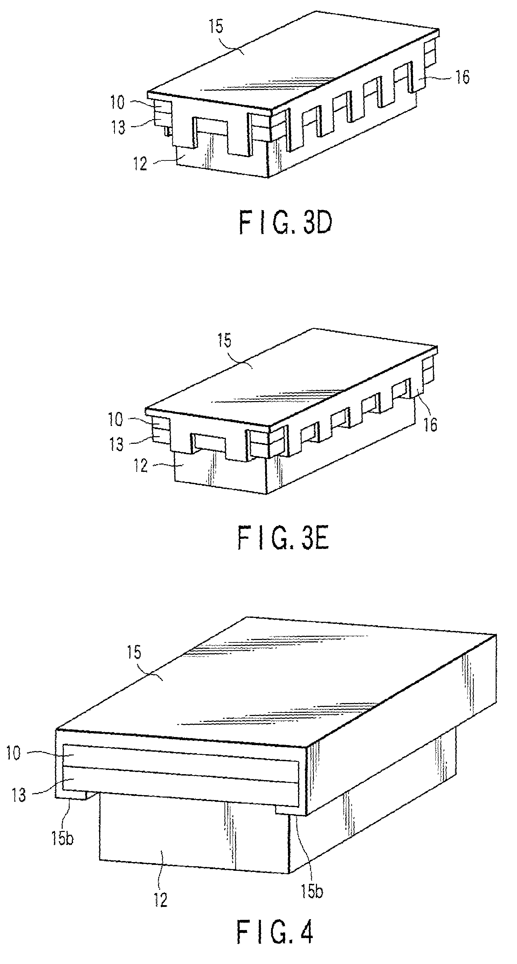

FIGS. 3A to 3E show the assembly process of the fuel cell. First, the membrane electrode assembly 10 is stacked on the flange 13 of the box-like container 12 (FIGS. 3A, 3B). The cover plate 15 is put over the membrane electrode assembly 10 (FIGS. 3C, 3D). The catches 16 on the peripheral edge of the cover plate 15 are bent, and attached tightly to the back peripheral edge of the flange 13 (FIG. 3E).

Since the membrane electrode assembly 10 is formed of a relatively soft resin, by bending and crimping the catches 16, the front side of the flange 13 (the upside in the drawing) is attached tightly to the membrane electrode assembly 10.

FIG. 4 is a perspective view of another example of the fuel cell of the invention. Same as in the example above, the geometry of the horizontal projection of the membrane electrode assembly 10 is rectangular, and the outer shape of the flange 13 of the box-like container 12 is also in the same size and rectangular shape as the membrane electrode assembly 10. In this example, on two mutually opposite sides of the rectangular shape, a peripheral edge 15b of the cover plate 15 is bent to enclose the membrane electrode assembly 10 and the flange 13 of the box-like container 12, so that the box-like container 12 is fixed to the membrane electrode assembly 10. In this case, too, by bending and crimping the peripheral edge 15b of the cover plate 15, the front side of the flange 13 can be attached tightly to the membrane electrode assembly 10.

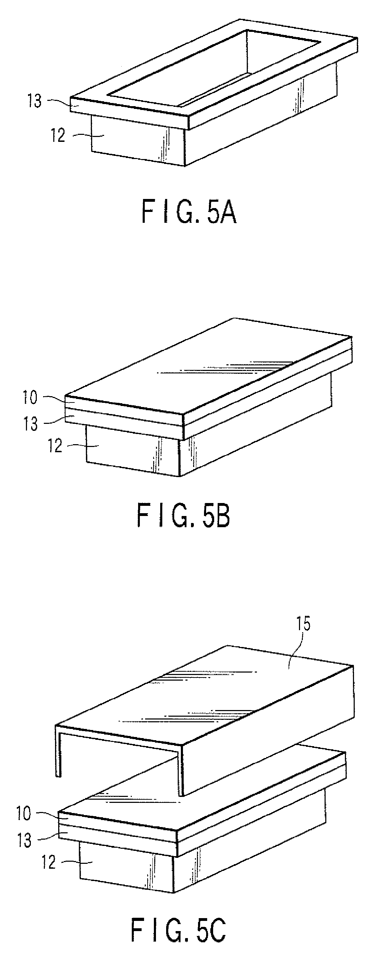

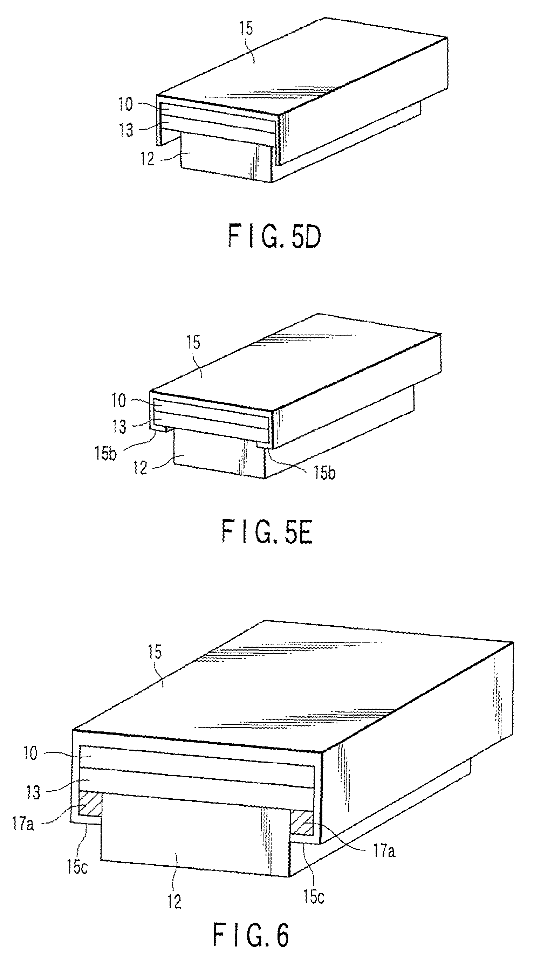

FIGS. 5A to 5E show the assembly process of the fuel cell. First, the membrane electrode assembly 10 is stacked on the flange 13 of the box-like container 12 (FIGS. 5A, 5B). The cover plate 15 is put over the membrane electrode assembly 10 (FIGS. 5C, 5D). The peripheral edge 15b of the cover plate is bent, and attached tightly to the rear side of the flange 13 (FIG. 5E).

At the step of bending the peripheral edge of the cover plate 15, either the peripheral edge may be bent after positioning the cover plate 15 to the membrane electrode assembly 10 and the box-like container 12 as in the example above, or the peripheral edge of the cover plate 15 may be bent in advance, and the membrane electrode assembly 10 and the flange 13 of the box-like container 12 may be inserted in this portion. In the former case, the step of bending the peripheral edge and the step of crimping the peripheral edge can be executed consecutively. In the latter case, after inserting the membrane electrode assembly 10 and the flange 13 of the box-like container 12, the peripheral edge is crimped, and then the front side of the flange 13 is attached tightly to the membrane electrode assembly 10.

FIG. 6 is a perspective view of another example of the fuel cell of the invention. In this example, a clearance is provided between the rear side of the flange 13 (downside in the drawing), and the bent peripheral edge 15c of the cover plate. By inserting a wedge 17a in this clearance, the front side of the flange 13 can be attached tightly to the membrane electrode assembly 10.

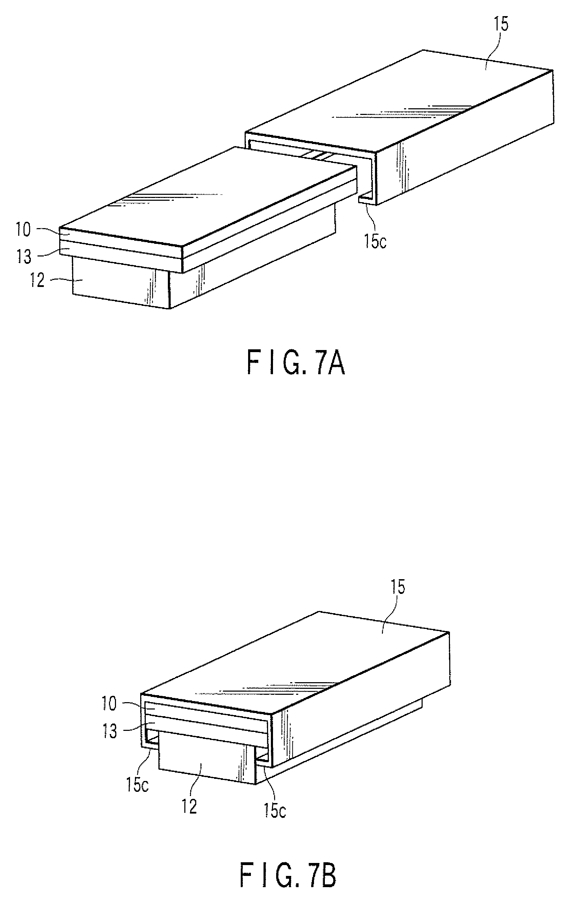

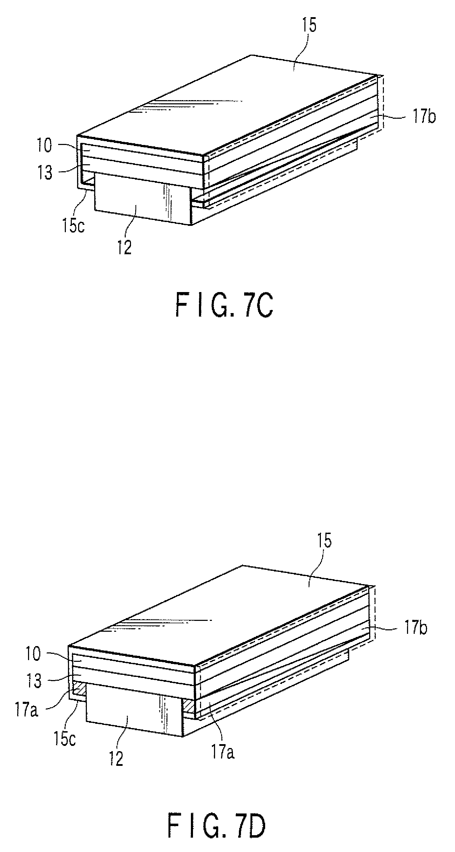

FIGS. 7A to 7D show the assembly process of the fuel cell. First, the peripheral edge 15c of the cover plate is bent in advance (FIG. 7A). After the membrane electrode assembly 10 is stacked on the flange 13 of the box-like container 12, the cover plate 15 is put over the flange 13 and the membrane electrode assembly 10 by being slid in lateral direction from the end side of the box-like container 12 (FIGS. 7A, 7B). In the clearance between the rear side of the flange 13 and the peripheral edge 15c of the cover plate, a wedge 17b is inserted from one end of the box-like container 12 (FIG. 7C). Also in the same clearance, the wedge 17a is inserted from the other end of the box-like container 12 (FIG. 7D).

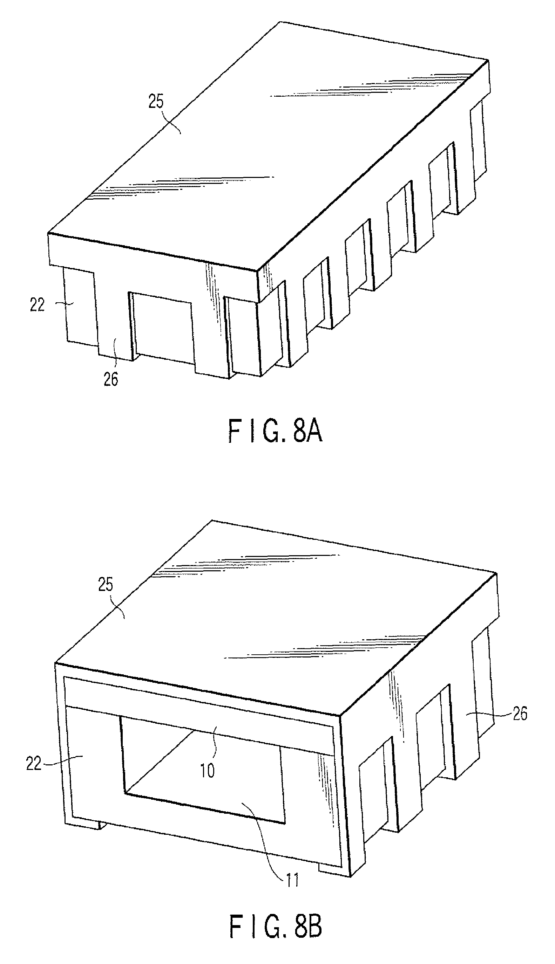

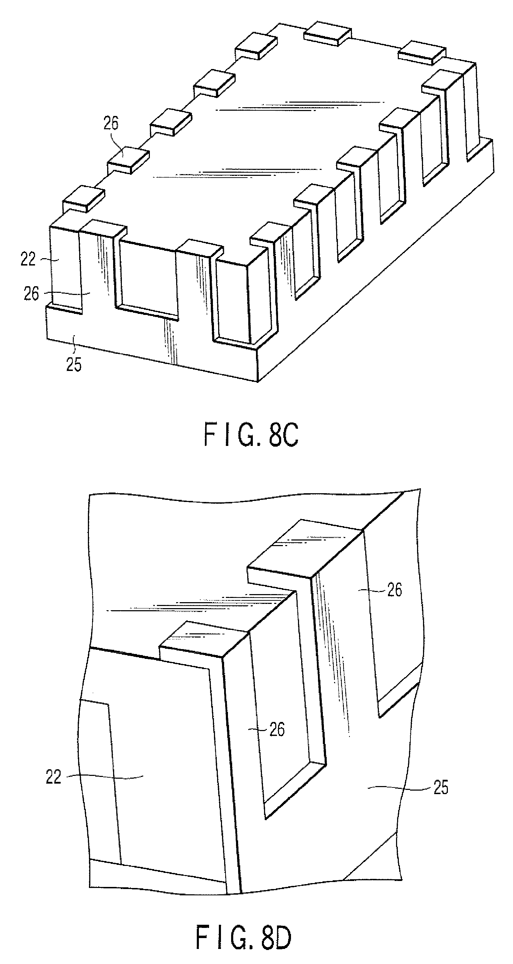

FIGS. 8A to 8D show another example of the fuel cell of the invention. FIG. 8A is a perspective view seen from top side (cover plate side), FIG. 8B is a perspective sectional view, FIG. 8C is a perspective view seen from bottom side (fuel tank side), and FIG. 8D is a perspective partial sectional view showing the detailed shape of the catch.

In this example, unlike the foregoing examples, the fuel tank 11 is formed of a box-like container 22 without flange. The geometry of the horizontal projection of the membrane electrode assembly 10 is rectangular, and the outer shape of the box-like container 22 is also in the same size and rectangular shape as the membrane electrode assembly 10. A plurality of catches 26 are provided on the peripheral edge of a cover plate 25. These catches 26 are provided individually on four sides of the cover plate 25 corresponding to four sides of the rectangular shape. By bending these catches 26, the membrane electrode assembly 10 and the box-like container 22 are enclosed, so that the box-like container 22 is fixed to the membrane electrode assembly 10.

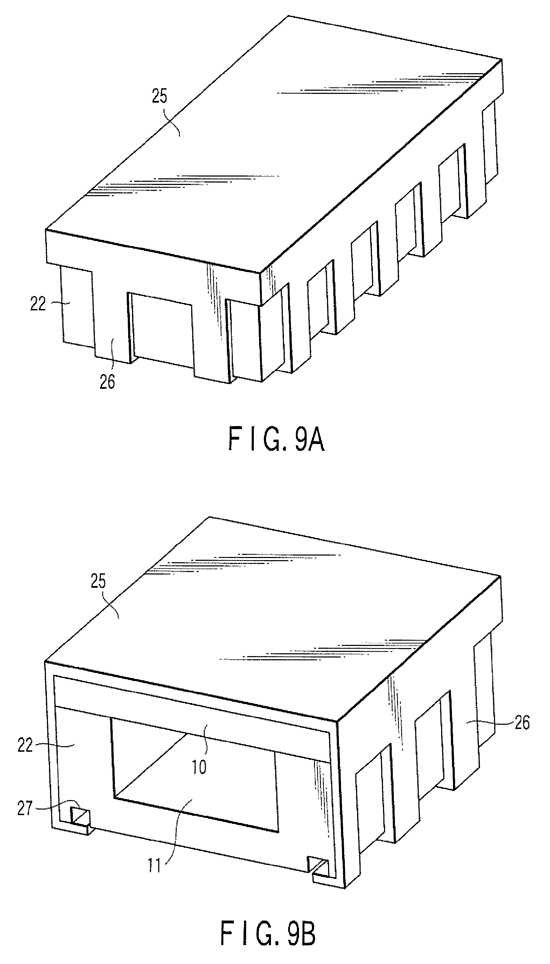

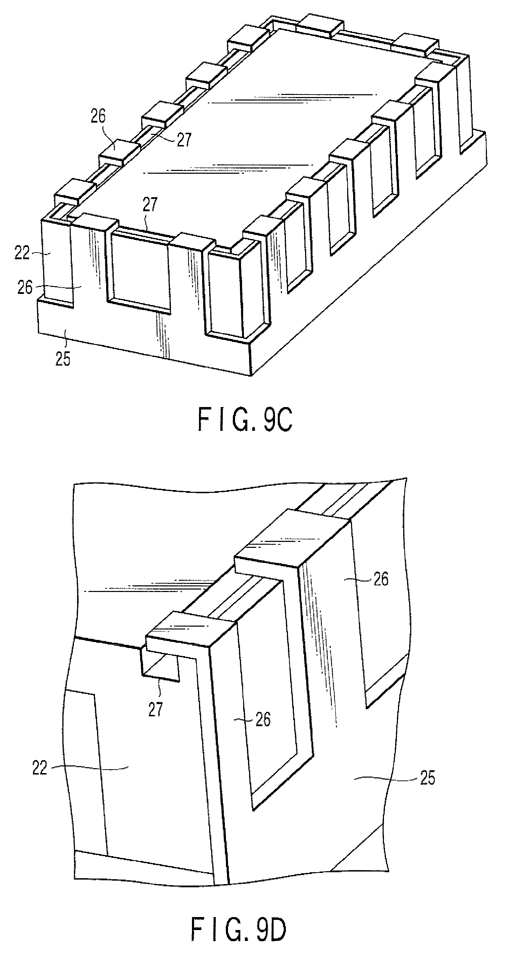

FIGS. 9A to 9D show another example of the fuel cell of the invention. This example is partly modified from the form in FIGS. 8A to 8D. In this example, a groove 27 is provided in the bottom of the box-like container 22 along the outer circumference. This groove 27 is formed for improving the working efficiency when crimping the catches 26.

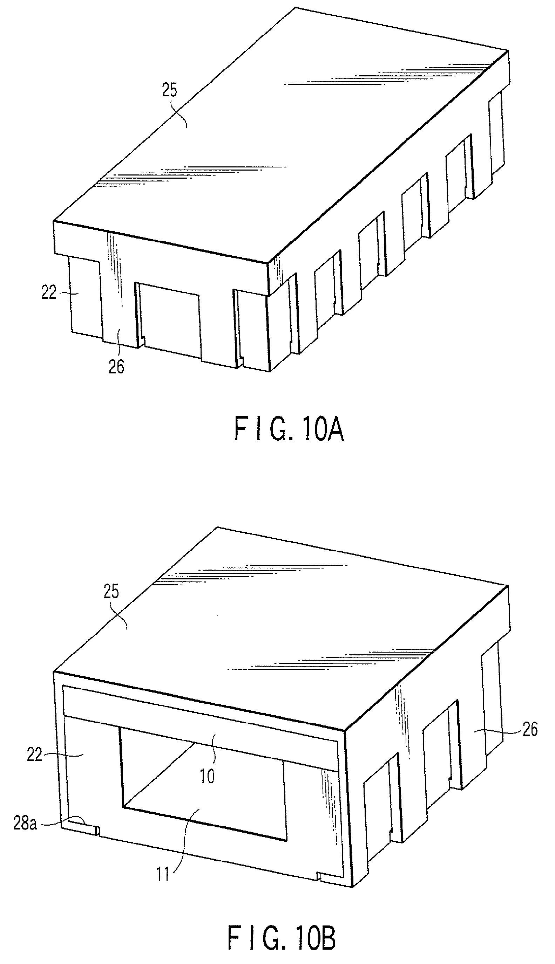

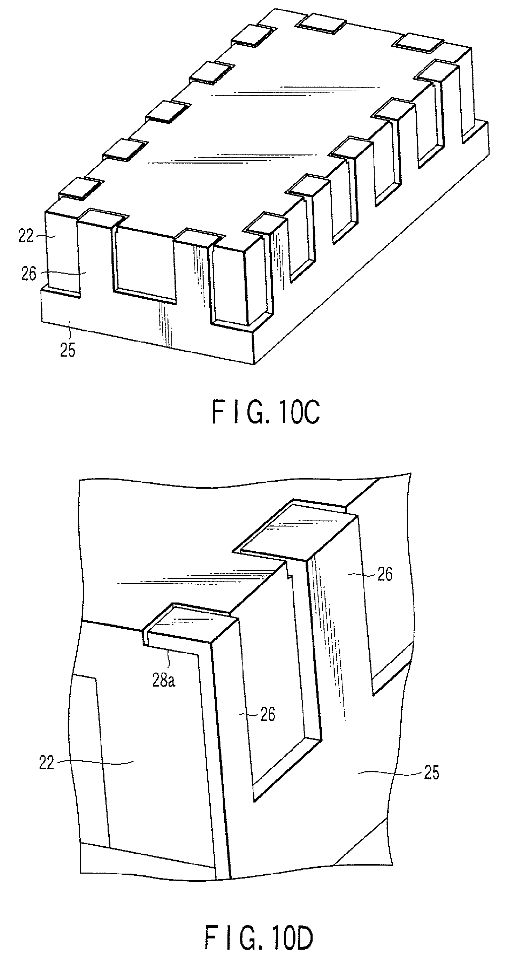

FIGS. 10A to 10D show another example of the fuel cell of the invention. This example is also partly modified from the form in FIGS. 8A to 8D. In this example, a plurality of recesses 28a are formed in the peripheral edge in the bottom of the box-like container 22. These recesses 28a are provided on four sides of the cover plate 25 corresponding to four sides of the rectangular shape, individually corresponding to the catches 26. The width and depth of the recesses 28a are nearly the same as the width and thickness of the catches 26. Accordingly, when the catches 26 are bent, the distal end portions of the catches 26 are aligned on the same plane as the bottom of the box-like container 22, and do not project from the bottom of the box-like container 22.

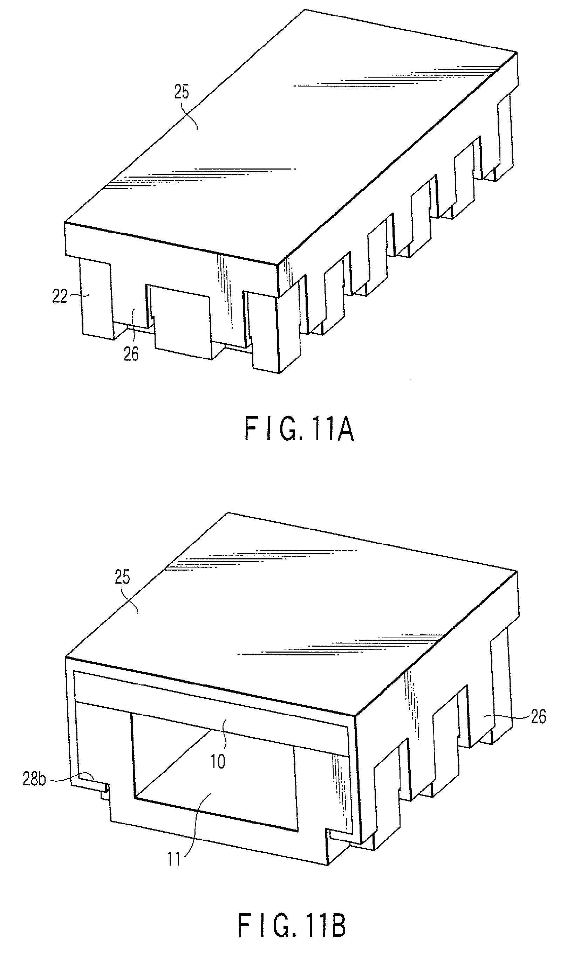

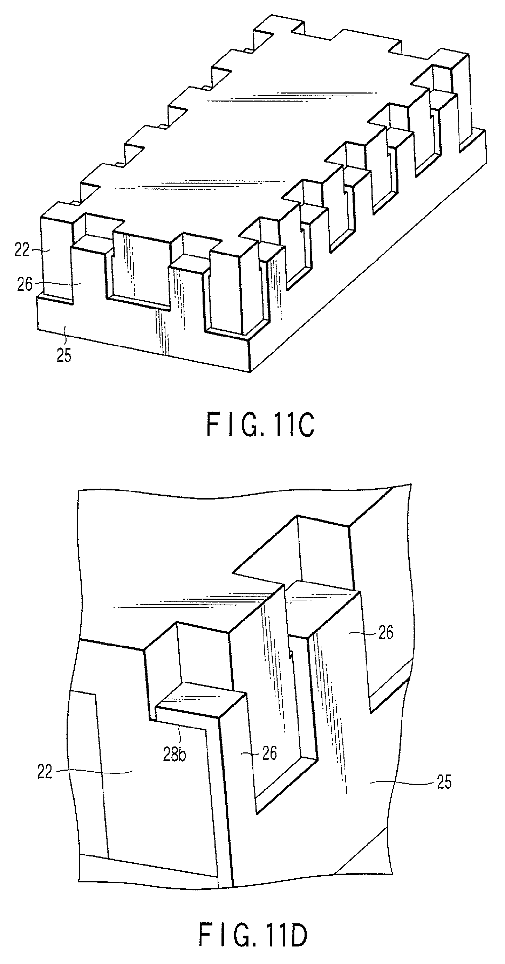

FIGS. 11A to 11D show another example of the fuel cell of the invention. This example is partly modified from the form in FIGS. 10A to 10D. In this example, a plurality of recesses 28b are formed in the peripheral edge in the bottom of the box-like container 22. These recesses 28b are provided on four sides of the cover plate 25 corresponding to four sides of the rectangular shape, individually corresponding to the catches 26. The width of the recesses 28b is nearly the same as the width of the catches 26, and the depth of the recesses 28b is greater than the thickness of the catches 26. Accordingly, when the catches 26 are bent, the distal end portions of the catches 26 are concealed in the recesses 28b, and do not project from the bottom of the box-like container 22.

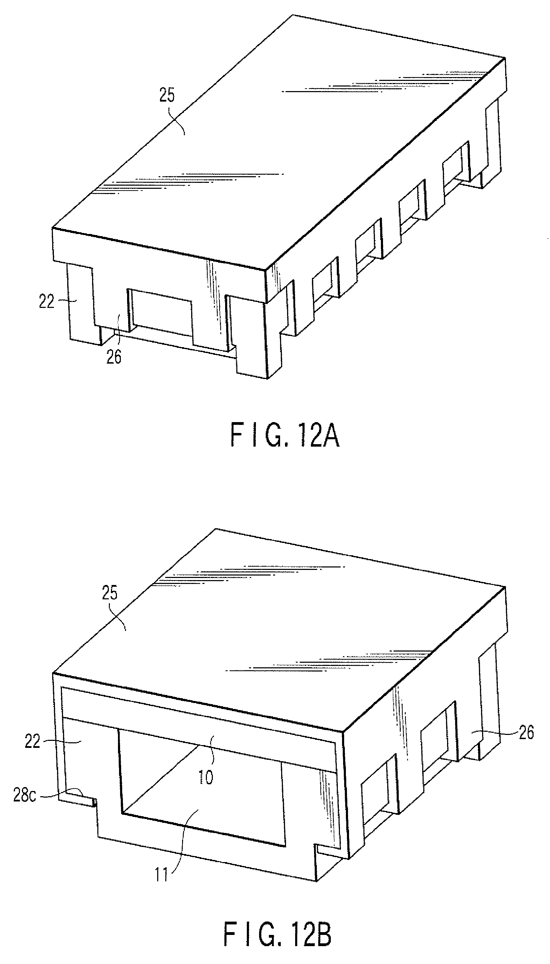

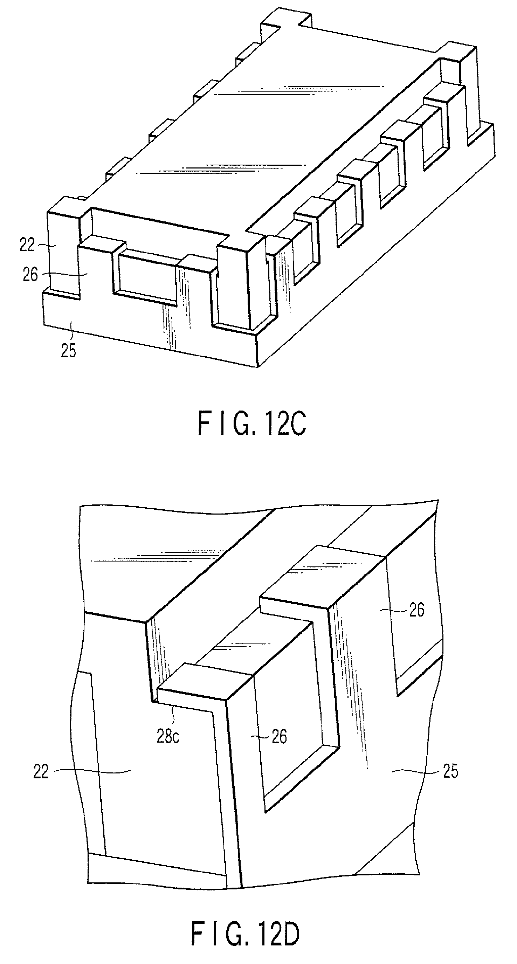

FIGS. 12A to 12D show another example of the fuel cell of the invention. This example is partly modified from the form in FIGS. 8A to 8D. In this example, steps 28c are formed, except in four corners, in the peripheral edge in the bottom of the box-like container 22. The depth of the steps 28c is greater than the thickness of the catches 26. Accordingly, when the catches 26 are bent, the distal end portions of the catches 26 are concealed in the steps 28c, and do not project from the bottom of the box-like container 22.

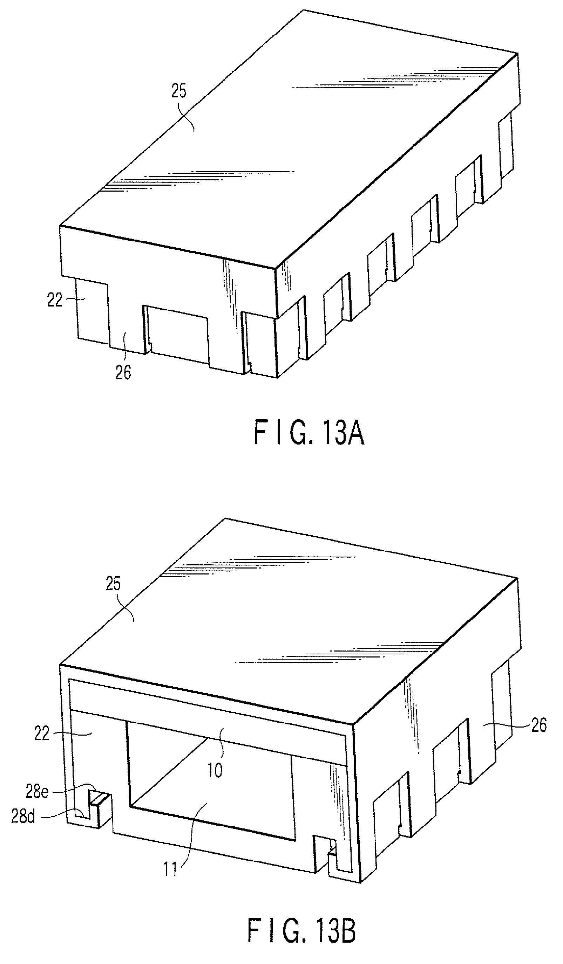

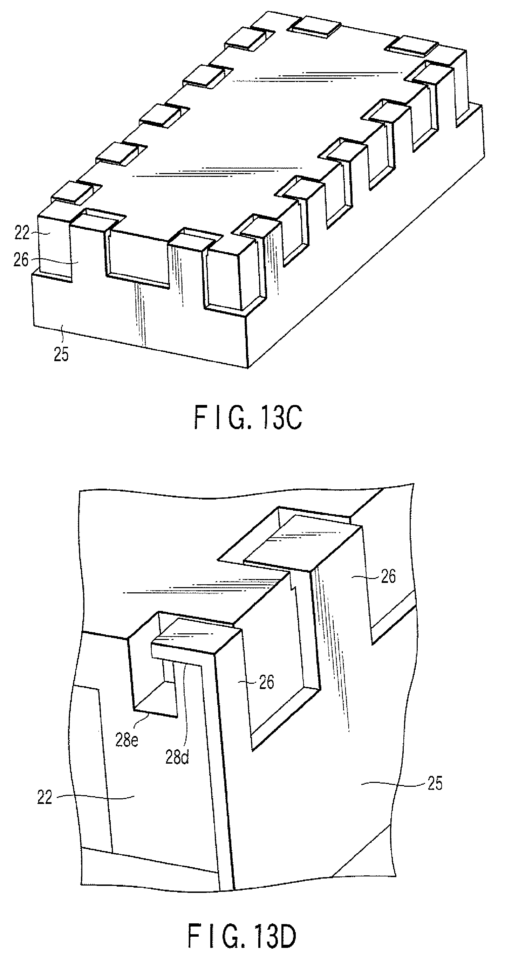

FIGS. 13A to 13D show another example of the fuel cell of the invention. This example is partly modified from the form in FIGS. 10A to 10D. A plurality of recesses are formed in the peripheral edge in the bottom of the box-like container 22. These recesses have the bottom in two steps, and the depth of a front side (outer side) recess 28d is nearly equal to the thickness of the catch 26, and the depth of an inner side recess 28e is deeper than the depth of the front side recess 28d. When attaching the cover plate 25 to the membrane electrode assembly 10 and the box-like container 22, the catch 26 is first bent along the front side recess 28d, and then further bent into the inner side recess 28e in a J-shape. As a result, when the catches 26 are bent, the catches 26 do not project from the bottom of the box-like container 22. In addition, since the distal ends of the catches 26 are engaged with the inner side recess 28e, the catches 26 are fixed firmly in the recesses 28d, 28e.

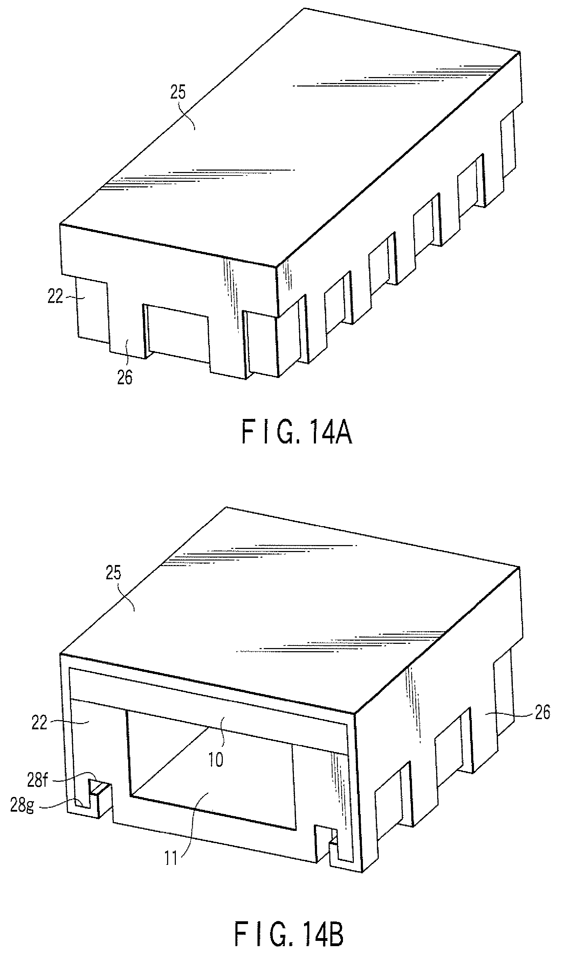

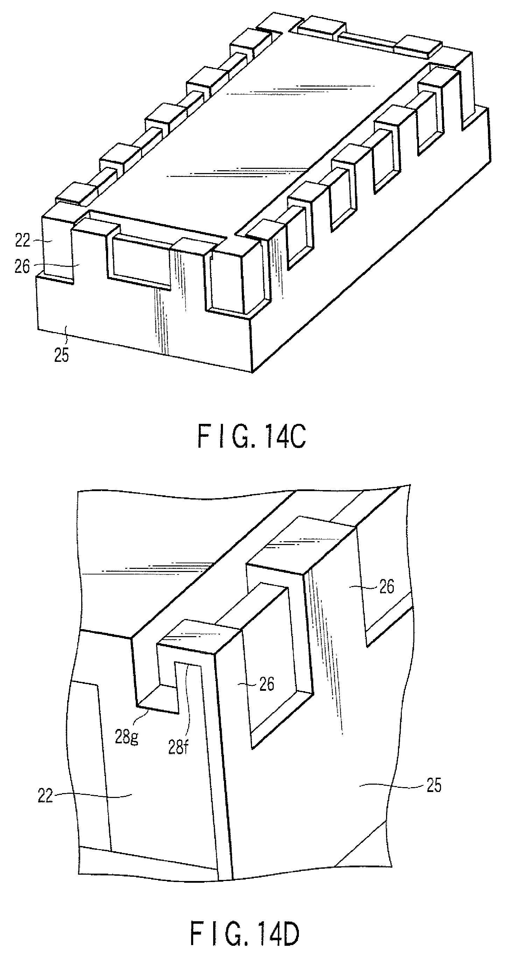

FIGS. 14A to 14D show another example of the fuel cell of the invention. This example is partly modified from the form in FIGS. 9A to 9D. Steps 28f are formed, except in four corners, along the outer circumference of the bottom of the box-like container 22, and grooves 28g are further formed in the inner parts of the steps 28f. The depth of each step 28f is nearly equal to the thickness of the catch 26. When attaching the cover plate 25 to the membrane electrode assembly 10 and the box-like container 22, the catch 26 is first bent along the front side step 28f, and then further bent into the inner side groove 28g in a J-shape. As a result, when the catches 26 are bent, the distal end portions of the catches 26 do not project from the bottom of the box-like container 22. In addition, since the distal ends of the catches 26 are engaged with the groove 28g, the catches 26 are fixed firmly in the step 28f and groove 28g.

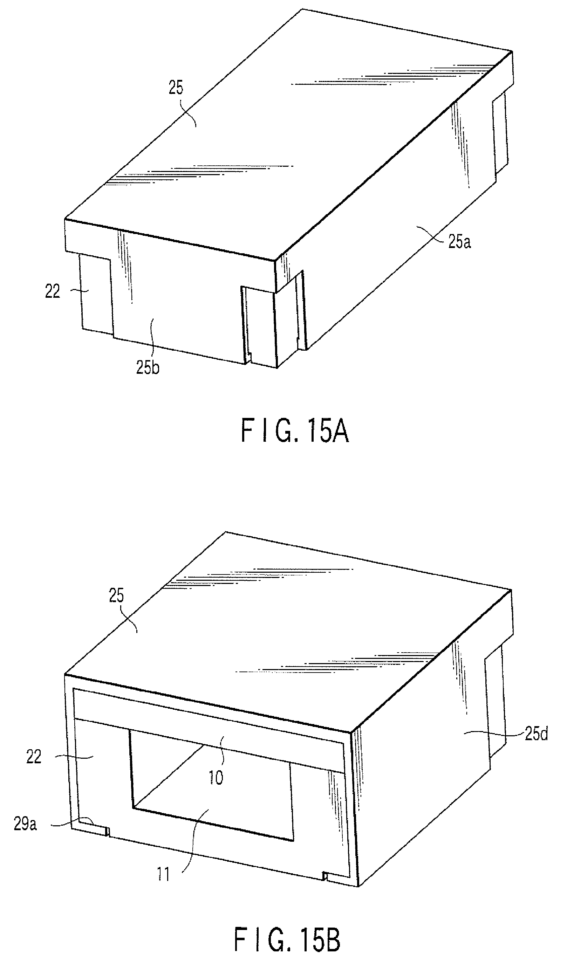

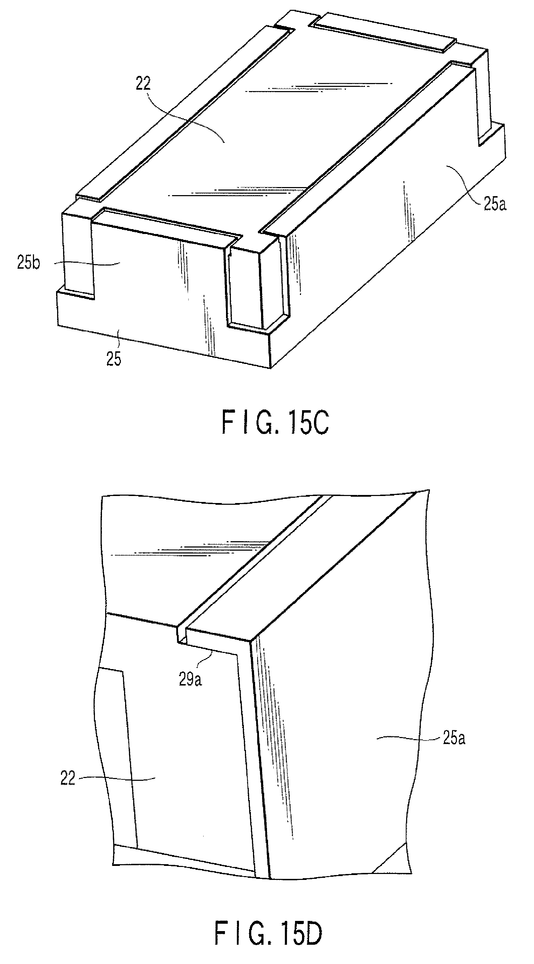

FIGS. 15A to 15D show another example of the fuel cell of the invention. FIG. 15A is a perspective view seen from top side (cover plate side), FIG. 15B is a perspective sectional view, FIG. 15C is a perspective view seen from bottom side (fuel tank side), and FIG. 15D is a perspective partial sectional view showing the detailed shape of the peripheral edge of the cover plate.

In this example, too, the fuel tank 11 is formed of the box-like container 22 without flange. The geometry of the horizontal projection of the membrane electrode assembly 10 is rectangular, and the outer shape of the box-like container 22 is also in the same size and rectangular shape as the membrane electrode assembly 10. The cover plate 25 projects to outer side in its peripheral edges 25a, 25b, excluding its four corners. On four sides of the rectangular shape, the peripheral edges 25a, 25b of the cover plate 25 are bent to enclose the membrane electrode assembly 10 and the box-like container 22, and hence the box-like container 22 is fixed to the membrane electrode assembly 10. In this case, too, by bending and crimping the peripheral edges 25a, 25b of the cover plate 25, the opening end of the box-like container 22 is fitted tightly to the membrane electrode assembly 10.

In this example, steps 29a are formed in the peripheral edge of the bottom of the box-like container 22, except in four corners. The depth of each step 29a is nearly equal to the thickness of the peripheral edges 25a, 25b of the cover plate 25. Accordingly, when the peripheral edges 25a 25b are bent, the distal end portions of the peripheral edges 25a, 25b are aligned on the same plane as the bottom of the box-like container 22, and do not project from the bottom of the box-like container 22.

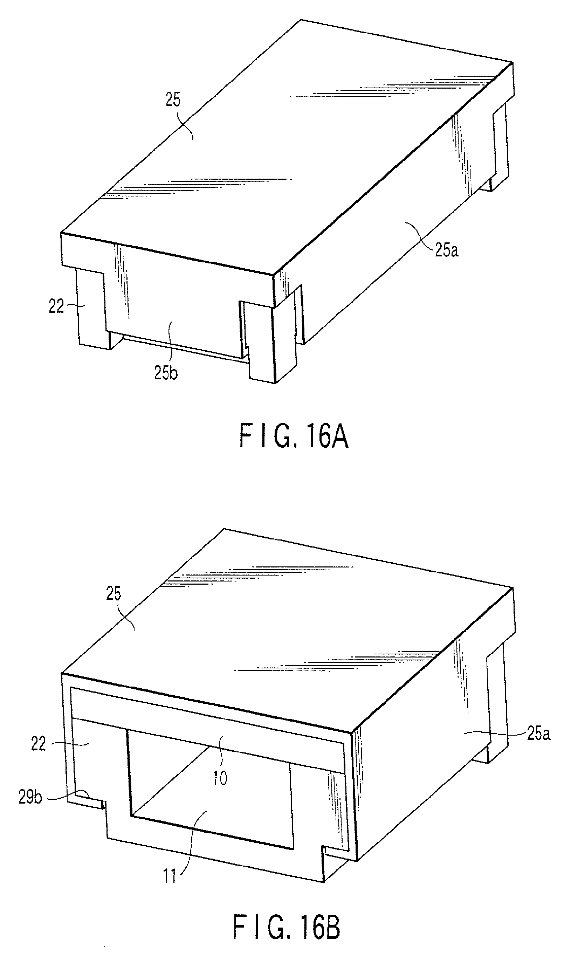

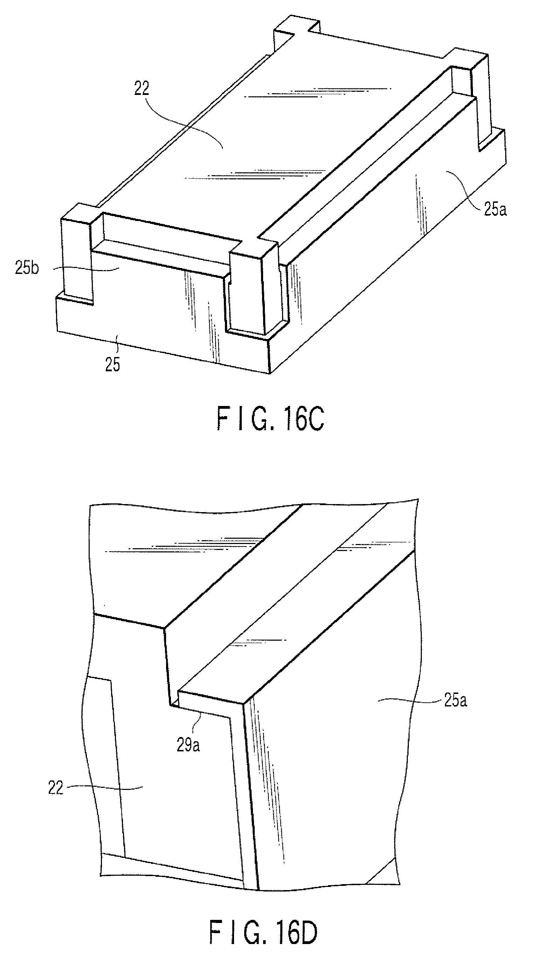

FIGS. 16A to 16D show another example of the fuel cell of the invention. This example is further modified from the form in FIGS. 15A to 15D. In this example, too, steps 29b are formed, except in four corners, in the peripheral edge in the bottom of the box-like container 22. The depth of each step 29b is greater than the thickness of the peripheral edges 25a, 25b of the cover plate 25. Accordingly, when the peripheral edges 25a, 25b are bent, the distal end portions of the peripheral edges 25a, 25b are concealed in the steps 29b, and do not project from the bottom of the box-like container 22.

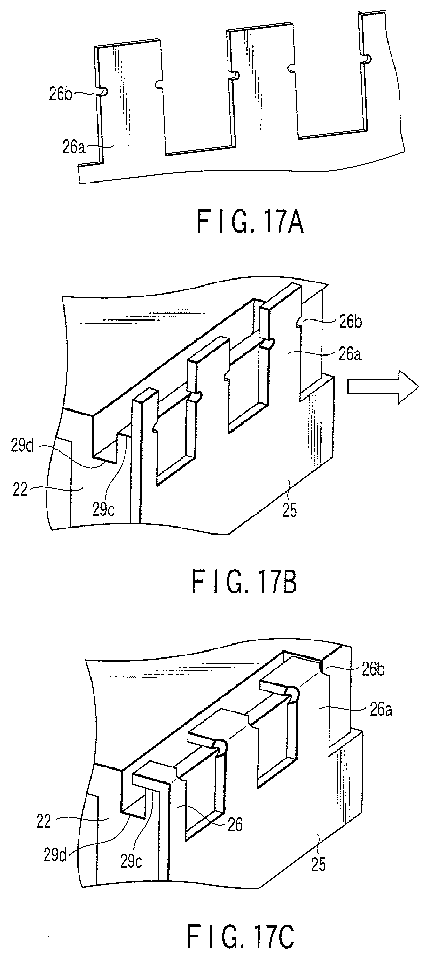

FIGS. 17A to 17C show other example of the cover plate shape of the fuel cell of the invention. This example is partly modified from the form in FIGS. 14A to 14D. Steps 29c are formed, except in four corners, along the outer circumference in the bottom of the box-like container 22, and grooves 29d are formed in the inner parts of the steps 29c. The depth of each step 29c is nearly equal to the thickness of the catch 26a. In this example, notches 26b are formed at both flanks of the catch 26a near the distal end of the catch 26a. When bending the catch 26a along the step 29c, the bending position is defined by these notches 26b. As a result, the working efficiency is improved in bending operation.

The liquid fuel contained in the liquid fuel tank is not limited to a methanol fuel, but other liquid fuels may be contained, for example, an ethanol fuel such as an aqueous solution of ethanol or pure ethanol, a propanol fuel such as an aqueous solution of propanol or pure propanol, a glycol fuel such as an aqueous solution of glycol or pure glycol, dimethyl ether, or formic acid. In any case, a liquid fuel suited to the fuel cell is contained.

## Claims

1. A fuel cell comprising:
a membrane electrode assembly having a solid electrolyte membrane, a fuel electrode laminated at one side of the solid electrolyte membrane, and an air electrode laminated at the other side of the solid electrolyte membrane;
a fuel tank which is disposed at a rear side of the fuel electrode, stores a liquid fuel and supplies the liquid fuel to the fuel electrode; and
a cover plate disposed at a rear side of the air electrode,
wherein the fuel tank is composed of a box-like container, and this box-like container has an opening formed at a side facing the membrane electrode assembly, and also has a flange projecting out to the outer side, parallel to the membrane electrode assembly, formed at the edge of this opening, and
a peripheral edge of the cover plate is bent along an outer circumference of the membrane electrode assembly, an outer circumference and a rear side peripheral edge of the flange, and the membrane electrode assembly and the flange are enclosed by the peripheral edge of the cover plate, thereby the box-like container is fixed to the membrane electrode assembly.

2. The fuel cell according to claim 1, wherein the geometry of the horizontal projection of the membrane electrode assembly is rectangular, an outer shape of the flange of the box-like container is in the same size and rectangular shape as the membrane electrode assembly, and the peripheral edge of the cover plate is bent so as to enclose four sides of the rectangular shape.

3. The fuel cell according to claim 1, wherein the geometry of the horizontal projection of the membrane electrode assembly is rectangular, an outer shape of the flange of the box-like container is in the same size and rectangular shape as the membrane electrode assembly, and the peripheral edge of the cover plate is bent so as to enclose mutually opposite two sides of the rectangular shape.

4. The fuel cell according to claim 1, wherein the cover plate has a plurality of catches formed on its peripheral edge, and by bending these catches, the box-like container is fixed to the membrane electrode assembly.

5. A fuel cell comprising:
a membrane electrode assembly having a solid electrolyte membrane, a fuel electrode laminated at one side of the solid electrolyte membrane, and an air electrode laminated at the other side of the solid electrolyte membrane;
a fuel tank which is disposed at a rear side of the fuel electrode, stores a liquid fuel and supplies the liquid fuel to the fuel electrode; and
a cover plate disposed at a rear side of the air electrode,
wherein the fuel tank is composed of a box-like container having an opening formed at a side facing the membrane electrode assembly, and
a peripheral edge of the cover plate is bent along an outer circumference of the membrane electrode assembly, an outer circumference and a bottom peripheral edge of the box-like container, and the membrane electrode assembly and the box-like container are enclosed by the peripheral edge of the cover plate, thereby the box-like container is fixed to the membrane electrode assembly.

6. The fuel cell according to claim 5, wherein the geometry of the horizontal projection of the membrane electrode assembly is rectangular, an outer shape of the box-like container is in the same size and rectangular shape as the membrane electrode assembly, and the peripheral edge of the cover plate is bent so as to enclose four sides of the rectangular shape.

7. The fuel cell according to claim 5, wherein the geometry of the horizontal projection of the membrane electrode assembly is rectangular, an outer shape of the box-like container is in the same size and rectangular shape as the membrane electrode assembly, and the peripheral edge of the cover plate is bent so as to enclose mutually opposite two sides of the rectangular shape.

8. The fuel cell according to claim 5, wherein the cover plate has a plurality of catches formed on its peripheral edge, and by bending these catches, the box-like container is fixed to the membrane electrode assembly.

9. The fuel cell according to claim 8, wherein the bottom peripheral edge of the box-like container has a plurality of recesses formed corresponding to said plurality of catches, and distal end portions of the catches are put in the recesses, so that the distal end portions do not project from the bottom of the box-like container.

10. The fuel cell according to claim 9, wherein a depth of the recess is equal to a thickness of the distal end portion of the catch, so that a surface of the distal end portion is aligned on the same plane as the bottom of the box-like container.

11. The fuel cell according to claim 6, wherein the cover plate has projecting portions provided in the peripheral edge except for four corners, and by bending these projecting portions, the box-like container is fixed to the membrane electrode assembly.

12. The fuel cell according to claim 11, wherein the bottom peripheral edge of the box-like container has steps formed corresponding to the projecting portions, and the distal end portions of the projecting portions are housed in the steps, so that the distal end portions do not project from the bottom of the box-like container.

13. The fuel cell according to claim 12, wherein a depth of the step is equal to a thickness of the distal end portion of the projecting portion, so that a surface of the distal end portion is aligned on the same plane as the bottom of the box-like container.
